# EUROPEAN PATENT SPECIFICATION

(11) **EP 3 903 998 B1**
(45) Date of publication and mention of the grant of the patent: **21.10.2026**
(21) Application number: 19906774.5
(22) Date of filing: 22.07.2019
(51) Int. Cl.: B23Q 41/04, B23B 5/16, B23Q 7/02, B23Q 39/02, B23Q 39/00

(54) **PROCESSING MECHANISM AND MACHINING DEVICE HAVING SAME**
VERARBEITUNGSMECHANISMUS UND BEARBEITUNGSVORRICHTUNG DAMIT
MÉCANISME DE TRAITEMENT ET DISPOSITIF D'USINAGE PRÉSENTANT CE DERNIER

(30) Priority: 30.12.2018 CN 201811645634
(43) Date of publication of application: 03.11.2021
(73) Proprietor: Zhuhai Gree Intelligent Equipment Co., Ltd, Zhuhai, Guangdong 519070 (CN); Gree Electric Appliances, Inc. of Zhuhai, Zhuhai, Guangdong 519070 (CN)
(72) Inventor: GUO, Zhikai, Zhuhai, Guangdong 519070 (CN); XING, Xuhui, Zhuhai, Guangdong 519070 (CN); LUO, Zhiqiang, Zhuhai, Guangdong 519070 (CN)
(74) Representative: V.O.
(86) International application number: PCT/CN2019/097140
(87) International publication number: WO 2020/140423

(56) References cited:
- CN-A- 108 311 741
- CN-A- 108 311 741
- CN-A- 108 637 276
- CN-A- 108 637 276
- CN-A- 109 483 328
- CN-A- 109 483 329
- CN-U- 202 804 754
- CN-U- 202 804 754
- CN-U- 203 209 977
- DE-U1- 202005 010 729
- JP-A- 2001 205 521

## Description

### Technical Field

The disclosure relates to the technical field of cylinder machining devices, and in particular to a machining mechanism and a machining device with the machining mechanism.

### Background

A compressor is a fluid machine by which a low-pressure gas is improved to a high-pressure gas, and is a heart of a refrigeration system of an electrical device such as an air conditioner, a refrigerator, and an air-energy water heater. At present, in processes of turning end faces of two ends and chamfering inner and outer sides of a cylinder for forming a compressor cylinder, one end needs to be fixed to a main shaft end of a lathe so as to machine the other end, after the end is completely machined, a machine is stopped, a workpiece is manually turned, and re-clamped, and then the other end of the cylinder is machined. This machining mode is not only low in automation degree, but also one part is clamped twice and machined twice, it causes a problem that the machining efficiency of the cylinder is low.

CN 202 804 754 U discloses a machining mechanism according to the preamble of claim 1.

### Summary

The invention is defined by the appended claims. Some embodiments of the disclosure provide a machining mechanism and a machining device with the machining mechanism, as to solve a problem in the art known to inventors that machining efficiency of a cylinder is low.

In some embodiments, the first screw and the second screw are parallelly disposed along the vertical direction.

In some embodiments, the lower machining tool bit and the upper machining tool bit are extended to be disposed along the horizontal direction.

In some embodiments, the workbench includes: a turntable, wherein the turntable is rotatably disposed relative to the machining assembly; and an internal support clamp, wherein the internal support clamp is disposed on the turntable, the cylinder to be machined is provided on the internal support clamp in a sleeving manner, an outer surface of the internal support clamp positioned at a lower end portion of the cylinder is disposed in a distance from an inner wall of the cylinder, as to form an avoidance space for an operation of the cutting tool assembly.

In some embodiments, there are a plurality of internal support clamps, and the plurality of internal support clamps are disposed at intervals along a circumferential direction of the turntable.

In some embodiments, the workbench further includes: a second driving portion, wherein the second driving portion is connected with the turntable, and the second driving portion is configured to drive the turntable to be circumferentially moved.

In some embodiments, the machining mechanism further includes: a base, wherein at least one of the workbench, the machining assembly and the first driving portion is disposed on the base.

According to another aspect of the disclosure, a machining device is provided, including a machining mechanism, herein the machining mechanism is the above machining mechanism.

A technical scheme of some embodiments of the disclosure is applied, the machining mechanism is used to simultaneously machine both two ends of the cylinder, the machining efficiency of the cylinder is effectively improved, and the practicability of the machining mechanism is improved.

### Brief Description of the Drawings

Drawings of the description for constituting a part of the present application are used to provide further understanding of the disclosure, exemplary embodiments of the disclosure and descriptions thereof are used to explain the disclosure, and do not constitute improper limitation to the disclosure. In the drawings:

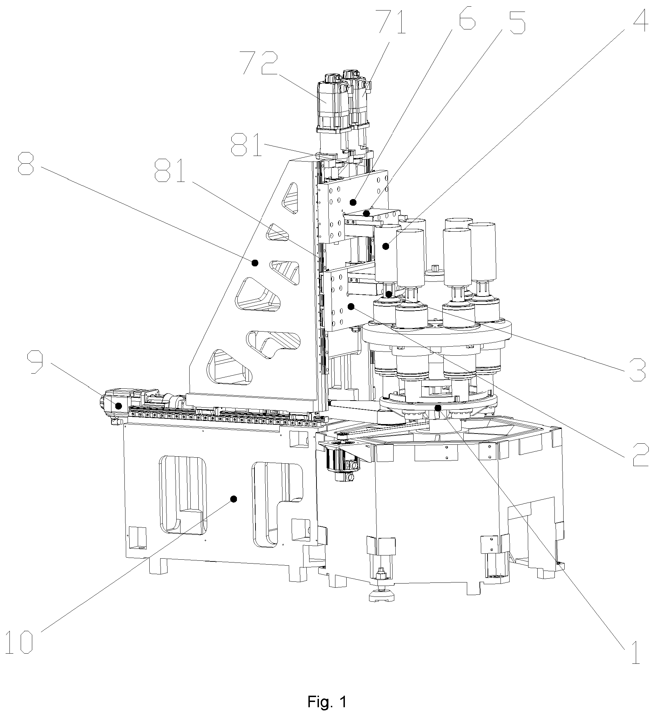

Fig. 1 shows a structure schematic diagram according to an embodiment of a machining mechanism of the disclosure.

Herein, the above drawings include the following reference signs:
1. Turntable; 2. Lower carriage plate; 3. Internal support clamp; 4. Cylinder; 5. Cutting tool assembly; 6. Upper carriage plate; 71. First screw nut pair; 72. Second screw nut pair; 8. Support piece; 81. Guide rail; 9. First driving portion; and 10. Base.

### Detailed Description of the Embodiments

The invention will be described in detail below with reference to the accompanying drawings and in conjunction with the embodiments.

It should be noted that terms used here are only used for describing specific implementation modes, and are not intended to limit the exemplary implementation modes according to the present application. As used herein, unless clearly specified otherwise in the context, a singular form is also intended to include a plural form. In addition, it should also be understood that when the terms "comprising" and/or "including" are used in the description, it is indicated that there are features, steps, operations, devices, components and/or combinations thereof.

It should be noted that the terms "first", "second", and the like in the specification and claims of the present application and in the above drawings are used to distinguish similar objects and are not necessarily used to describe a specific sequence or order. It will be appreciated that the data used in this way may be interchanged where appropriate, so that the implementation manners of the present application described herein can be implemented, for example, in an order other than those illustrated or described herein. In addition, the terms "include" and "have" and any variations thereof are intended to cover non-exclusive inclusions. For example, a process, method, system, product, or equipment that comprises a series of steps or units need not be limited to those steps or units that are explicitly listed, and may instead include other steps or units that are not explicitly listed or inherent to these processes, methods, products or equipment.

For ease of description, spatially relative terms such as "on", "over", "on an upper surface", "above", etc. may be used herein to describe a spatial position relationship between one device or feature as shown in the figures and other devices or features. It will be appreciated that the spatially relative terms are intended to comprise different orientations of the device in use or operation in addition to the orientation of the device described in the figures. For example, if the device in the figures is turned upside down, the device described as "over other devices or configurations" or "on other devices or configurations" will be positioned "below other devices or configurations" or "under other devices or configurations". Thus, the exemplary term "over" may include both "above" and "below". The device may also be positioned in other different manners (rotated for 90 degrees or at other orientations), and the spatially relative descriptors used herein are interpreted accordingly.

Now, the exemplary implementation modes according to the present application are described in more detail with reference to the drawings. However, these exemplary implementation modes may be implemented in multiple different forms, and should not be interpreted to be limited to the implementation modes described here. It should be understood that these implementation modes are provided to make the disclosure of the present application thorough and complete, and adequately convey concepts of these exemplary implementation modes to those of ordinary skill in the art, in the drawings, for clarity, thicknesses of layers and regions may be enlarged, and the same reference sign is used to show the same device, therefore the description of them may be omitted.

As shown in Fig. 1, according to an embodiment of the disclosure, a machining mechanism is provided.

In some embodiments, the machining mechanism includes a workbench, a machining assembly and a first driving portion 9. The workbench is configured to support a cylinder 4 to be machined. The machining assembly is disposed adjacent to the workbench, and the machining assembly is provided with a cutting tool assembly 5 for machining both two ends of the cylinder simultaneously and respectively. The first driving portion 9 is connected with the machining assembly, and the first driving portion 9 is configured to drive the machining assembly to be moved close to or away from the workbench.

In the embodiments, the machining mechanism is used to simultaneously machine both two ends of the cylinder, the machining efficiency of the cylinder is effectively improved, and the practicability of the machining mechanism is improved.

Herein, in some embodiments, the machining assembly includes a slide rail and a support piece 8. The slide rail is disposed along a horizontal direction, a first end of the slide rail is disposed adjacent to the workbench, and a second end of the slide rail is disposed away from the workbench. The support piece 8 is movably disposed on the slide rail, the first driving portion 9 is disposed adjacent to the second end of the slide rail and connected with the support piece 8, the cutting tool assembly 5 is connected with the support piece 8, a part of the cutting tool assembly 5 is movable along a vertical direction so as to perform a machining operation on the cylinder, and the first driving portion 9 is configured to drive the support piece 8 to drive the cutting tool assembly 5 to be reciprocated on the slide rail. Such a configuration is capable of controlling a distance between the cutting tool assembly 5 and the cylinder to be machined through the first driving portion 9, so that the cylinder is conveniently machined.

In some embodiments, the cutting tool assembly 5 includes a lower machining tool bit and a first screw nut pair 71, the first screw nut pair 71 is connected with the support piece 8, an end portion of a first screw of the first screw nut pair 71 is provided with a lower carriage plate 2, the lower carriage plate 2 is connected with the lower machining tool bit, and the lower machining tool bit is used for performing the machining operation on a lower end of the cylinder.

In some embodiments, the cutting tool assembly 5 includes an upper machining tool bit and a second screw nut pair 72, the second screw nut pair 72 is connected with the support piece 8, the second screw nut pair 72 and the first screw nut pair 71 are disposed at an interval, an end portion of a second screw of the second screw nut pair 72 is provided with an upper carriage plate 6, the upper carriage plate 6 is connected with the upper machining tool bit and positioned above the lower carriage plate 2, and the upper machining tool bit is used for performing the machining operation on an upper end of the cylinder. Herein, the first screw and the second screw are parallelly disposed along the vertical direction. The lower machining tool bit and the upper machining tool bit are extended along the horizontal direction. Such a configuration is capable of avoiding the support piece from interfering with the cylinder to be machined and the workbench.

In some embodiments, the support piece 8 is provided with at least one guide rail 81. The lower carriage plate 2 and the upper carriage plate 6 are movably connected with the guide rail 81, the first screw nut pair 71 is configured to drive the lower carriage plate 2 to be moved along a length direction of the guide rail 81, and the second screw nut pair 72 is configured to drive the upper carriage plate 6 to be moved along the length direction of the guide rail 81. As shown in Fig. 1, two guide rails 81 are shown in the figure.

In some embodiments, the workbench includes a turntable 1 and an internal support clamp 3. The turntable 1 is rotatably disposed relative to the machining assembly. The internal support clamp 3 is disposed on the turntable 1, the cylinder to be machined is provided on the internal support clamp 3 in a sleeving manner, an outer surface of the internal support clamp 3 positioned at a lower end portion of the cylinder is disposed in a distance from an inner wall of the cylinder, as to form an avoidance space for an operation of the cutting tool assembly 5.

In some embodiments, there are a plurality of internal support clamps 3, and the plurality of internal support clamps 3 are disposed at intervals along a circumferential direction of the turntable 1. Such a configuration is capable of simultaneously placing multiple cylinders to be machined on one turntable, after one cylinder is completely machined, the turntable is rotated by a preset angle and then the next cylinder is machined, such a configuration is capable of further improving the efficiency of machining the cylinder.

In some embodiments, the workbench further includes a second driving portion, the second driving portion is connected with the turntable 1, and the second driving portion is configured to drive the turntable 1 to be circumferentially moved. Such a configuration is capable of improving reliability and stability of turntable rotation.

In order to further improve the stability of the machining mechanism, the machining mechanism is further provided with a base 10. Herein, at least one of the workbench, the machining assembly and the first driving portion 9 is disposed on the base 10.

The machining mechanism in the above embodiments may also be used in the technical field of machining devices, namely according to another aspect of the disclosure, a machining device is provided, including a machining mechanism, herein the machining mechanism is the machining mechanism in the above embodiments.

Specifically, the device is a scheme that two ends of a compressor cylinder are simultaneously machined, end face turning of two ends and chamfering of inner and outer sides are synchronously performed, and simultaneously completed. The device is used for machining parts of the compressor cylinder, the machining of the two ends are synchronously performed, so that time required to machine one cylinder is reduced by a half. Because the workpiece is machined by one time of clamping, a mode in a method known to inventors that one end needs to be turned and re-clamped after machining and then the other is machined is changed, time for the second time of clamping is saved, and the production efficiency is improved again. Manual secondary clamping is eliminated in a process of machining the parts of the cylinder, so it is convenient for achieving automatic production.

The first driving portion is a radial feed motor, one radial feed motor and two axial feed motors (power source motors in the first screw nut pair and the second screw nut pair), three servo motors in total, are used to control upper and lower two groups of forming cutting tools to machine the workpiece.

The upper and lower two groups of the forming cutting tools are installed on tool fixing seats, two tool fixing seats are respectively formed by the upper and lower two carriage plates, positions of the carriage plates are controlled by a servo system to guarantee that length accuracy of the compressor cylinder is controlled within ±0.15 mm. The internal support clamp supports the workpiece from the inside so that two ends of the workpiece are exposed to be machined in a machining process without interference with a tool motion.

As shown in Fig. 1, the part of the compressor cylinder is in an upright position, and is clamped by the internal support clamp 3, so that an entire outer circle and both ends of the part are outside a clamping position, the interference does not occur while the upper and lower two groups of the forming cutting tools approach the part from two ends of the part respectively.

During machining, the part of the compressor cylinder is rotated along with a main shaft of a machine tool, the upper and lower two groups of the forming cutting tools installed on the two cutting tool seats simultaneously approach the workpiece from two ends of the part, as to form an effect of machining end faces of two ends and chamfering inner and outer sides of the cylinder. The two cutting tool seats are respectively fixed on the upper carriage plate 6 and the lower carriage plate 2. The support piece 8 is equipped with a high-precision linear guide rail and two groups of screw nut pairs, one of the screw nut pairs is long and the other is short, a long screw is connected with the lower carriage plate 2, a short screw is connected with the upper carriage plate 6, the screws are driven by the servo motor, a position of the cutting tool is controlled by the servo system, and the length accuracy of the compressor cylinder is controlled within ±0.15 mm.

The lower carriage plate 2, the upper carriage plate 6, the cutting tool assembly, the servo motor and the like are all directly or indirectly fixed on the support piece 8, and moved along with the motion of the support piece 8. The support piece 8 is located on the base 10, and there is a group of a high-precision linear slide rail and screw nut pairs on the base 10, a movement accuracy of the support piece 8 in a radial direction of the workpiece is controlled by the guiding effect of the linear slide rail, the support piece 8 is driven to be moved by the radial feed motor installed on the base 10, and according to a size of the workpiece, a position of a movable column may be adjusted to a suitable machining position. The workbench is driven by rotating and positioning of the main motor under a machine tool workbench, the workpiece is braked after being rotated to the machining position and the machining process is started. The two groups of the servo motors on the support piece 8 are controlled by a servo numerical control system, rotated with the main shaft of the machine tool and cooperated with the exchange workbench, as to achieve the accurate and continuous machining process.

## Claims

1. A machining mechanism, comprising
a workbench, wherein the workbench is configured to support a cylinder (4) to be machined;
wherein the machining mechanism further comprises a machining assembly, wherein the machining assembly is disposed adjacent to the workbench, and the machining assembly is provided with a cutting tool assembly (5) for machining both two ends of the cylinder simultaneously and respectively; and
a first driving portion (9), wherein the first driving portion (9) is connected with the machining assembly, and the first driving portion (9) is configured to drive the machining assembly to be moved close to or away from the workbench;
a slide rail, wherein the slide rail is disposed along a horizontal direction, a first end of the slide rail is disposed adjacent to the workbench, and a second end of the slide rail is disposed away from the workbench; and
a support piece (8), wherein the support piece (8) is movably disposed on the slide rail,
***characterized in that*** the cutting tool assembly (5) comprises a lower machining tool bit and a first screw nut pair (71), the first screw nut pair (71) is connected with the support piece (8), an end portion of a first screw of the first screw nut pair (71) is provided with a lower carriage plate (2), the lower carriage plate (2) is connected with the lower machining tool bit, and the lower machining tool bit is used for performing the machining operation on a lower end of the cylinder;
the cutting tool assembly (5) comprises an upper machining tool bit and a second screw nut pair (72), the second screw nut pair (72) is connected with the support piece (8), the second screw nut pair (72) and the first screw nut pair (71) are disposed at an interval, an end portion of a second screw of the second screw nut pair (72) is provided with an upper carriage plate (6), the upper carriage plate (6) is connected with the upper machining tool bit and positioned above the lower carriage plate (2), and the upper machining tool bit is used for performing the machining operation on an upper end of the cylinder;
the support piece (8) is provided with at least one guide rail (81), the lower carriage plate (2) and the upper carriage plate (6) are movably connected with the guide rail (81), the first screw nut pair (71) is configured to drive the lower carriage plate (2) to be moved along a length direction of the guide rail (81), and the second screw nut pair (72) is configured to drive the upper carriage plate (6) to be moved along the length direction of the guide rail (81);
and **in that**:
the first driving portion (9) is disposed adjacent to the second end of the slide rail and connected with the support piece (8), the cutting tool assembly (5) is connected with the support piece (8), a part of the cutting tool assembly (5) is movably disposed along a vertical direction so as to perform a machining operation on the cylinder, and the first driving portion (9) is configured to drive the support piece (8) to drive the cutting tool assembly (5) to be reciprocated on the slide rail.

2. The machining mechanism according to claim 1, wherein the first screw and the second screw are parallelly disposed along the vertical direction.

3. The machining mechanism according to claim 1, wherein the lower machining tool bit and the upper machining tool bit are extended to be disposed along the horizontal direction.

4. The machining mechanism according to claim 1, wherein the workbench comprises:
a turntable (1), wherein the turntable (1) is rotatably disposed relative to the machining assembly; and
an internal support clamp (3), wherein the internal support clamp (3) is disposed on the turntable (1), the cylinder (4) to be machined is provided on the internal support clamp (3) in a sleeving manner, an outer surface of the internal support clamp (3) positioned at a lower end portion of the cylinder (4) is disposed in a distance from an inner wall of the cylinder (4), as to form an avoidance space for an operation of the cutting tool assembly (5).

5. The machining mechanism according to claim 4, wherein there are a plurality of internal support clamps (3), and the plurality of internal support clamps (3) are disposed at intervals along a circumferential direction of the turntable (1).

6. The machining mechanism according to claim 4, wherein the workbench further comprises:
a second driving portion, wherein the second driving portion is connected with the turntable (1), and the second driving portion is configured to drive the turntable (1) to be circumferentially moved.

7. The machining mechanism according to claim 1, wherein the machining mechanism further comprises:
a base (10), wherein at least one of the workbench, the machining assembly and the first driving portion (9) is disposed on the base (10).

8. A machining device, comprising a machining mechanism, wherein the machining mechanism is the machining mechanism according to any one of claims 1 to 7.

## Patentansprüche

1. Bearbeitungsmechanismus, umfassend
eine Werkbank, wobei die Werkbank dazu eingerichtet ist, einen zu bearbeitenden Zylinder (4) zu tragen;
wobei der Bearbeitungsmechanismus ferner eine Bearbeitungsbaugruppe aufweist, wobei die Bearbeitungsbaugruppe benachbart zu der Werkbank angeordnet ist und die Bearbeitungsbaugruppe mit einer Schneidwerkzeugbaugruppe (5) zum gleichzeitigen und jeweiligen Bearbeiten beider Enden des Zylinders versehen ist; und
einen ersten Antriebsabschnitt (9), wobei der erste Antriebsabschnitt (9) mit der Bearbeitungsbaugruppe verbunden ist und der erste Antriebsabschnitt (9) dazu eingerichtet ist, die Bearbeitungsbaugruppe so anzutreiben, dass sie nahe an die Werkbank heran oder von dieser weg bewegt wird;
eine Gleitschiene, wobei die Gleitschiene entlang einer horizontalen Richtung angeordnet ist, ein erstes Ende der Gleitschiene benachbart zu der Werkbank angeordnet ist und ein zweites Ende der Gleitschiene von der Werkbank entfernt angeordnet ist; und
ein Stützstück (8), wobei das Stützstück (8) beweglich auf der Gleitschiene angeordnet ist,
**dadurch gekennzeichnet, dass** die Schneidwerkzeugbaugruppe (5) einen unteren Bearbeitungswerkzeugkopf und ein erstes Schrauben-Mutter-Paar (71) aufweist, das erste Schrauben-Mutter-Paar (71) mit dem Stützstück (8) verbunden ist, ein Endabschnitt einer ersten Schraube des ersten Schrauben-Mutter-Paars (71) mit einer unteren Schlittenplatte (2) versehen ist, die untere Schlittenplatte (2) mit dem unteren Bearbeitungswerkzeugkopf verbunden ist und der untere Bearbeitungswerkzeugkopf zum Durchführen des Bearbeitungsvorgangs an einem unteren Ende des Zylinders verwendet wird;
die Schneidwerkzeugbaugruppe (5) einen oberen Bearbeitungswerkzeugkopf und ein zweites Schrauben-Mutter-Paar (72) aufweist, das zweite Schrauben-Mutter-Paar (72) mit dem Stützstück (8) verbunden ist, das zweite Schrauben-Mutter-Paar (72) und das erste Schrauben-Mutter-Paar (71) in einem Abstand angeordnet sind, ein Endabschnitt einer zweiten Schraube des zweiten Schrauben-Mutter-Paars (72) mit einer oberen Schlittenplatte (6) versehen ist, die obere Schlittenplatte (6) mit dem oberen Bearbeitungswerkzeugkopf verbunden und oberhalb der unteren Schlittenplatte (2) positioniert ist und der obere Bearbeitungswerkzeugkopf zum Durchführen des Bearbeitungsvorgangs an einem oberen Ende des Zylinders verwendet wird;
das Stützstück (8) mit mindestens einer Führungsschiene (81) versehen ist, die untere Schlittenplatte (2) und die obere Schlittenplatte (6) beweglich mit der Führungsschiene (81) verbunden sind, das erste Schrauben-Mutter-Paar (71) dazu eingerichtet ist, die untere Schlittenplatte (2) so anzutreiben, dass sie entlang einer Längsrichtung der Führungsschiene (81) bewegt wird, und das zweite Schrauben-Mutter-Paar (72) dazu eingerichtet ist, die obere Schlittenplatte (6) so anzutreiben, dass sie entlang der Längsrichtung der Führungsschiene (81) bewegt wird;
und dadurch, dass:
der erste Antriebsabschnitt (9) benachbart zu dem zweiten Ende der Gleitschiene angeordnet und mit dem Stützstück (8) verbunden ist, die Schneidwerkzeugbaugruppe (5) mit dem Stützstück (8) verbunden ist, ein Teil der Schneidwerkzeugbaugruppe (5) entlang einer vertikalen Richtung beweglich angeordnet ist, um einen Bearbeitungsvorgang an dem Zylinder durchzuführen, und der erste Antriebsabschnitt (9) dazu eingerichtet ist, das Stützstück (8) anzutreiben, um die Schneidwerkzeugbaugruppe (5) auf der Gleitschiene hin- und herzubewegen.

2. Bearbeitungsmechanismus nach Anspruch 1, wobei die erste Schraube und die zweite Schraube entlang der vertikalen Richtung parallel angeordnet sind.

3. Bearbeitungsmechanismus nach Anspruch 1, wobei der untere Bearbeitungswerkzeugkopf und der obere Bearbeitungswerkzeugkopf entlang der horizontalen Richtung erstreckt angeordnet sind.

4. Bearbeitungsmechanismus nach Anspruch 1, wobei die Werkbank aufweist:
einen Drehtisch (1), wobei der Drehtisch (1) relativ zu der Bearbeitungsbaugruppe drehbar angeordnet ist; und
eine innere Stützklemme (3), wobei die innere Stützklemme (3) auf dem Drehtisch (1) angeordnet ist, der zu bearbeitende Zylinder (4) auf die innere Stützklemme (3) aufgeschoben vorgesehen ist, eine Außenfläche der inneren Stützklemme (3), die an einem unteren Endabschnitt des Zylinders (4) positioniert ist, in einem Abstand von einer Innenwand des Zylinders (4) angeordnet ist, um einen Freiraum für einen Betrieb der Schneidwerkzeugbaugruppe (5) zu bilden.

5. Bearbeitungsmechanismus nach Anspruch 4, wobei mehrere innere Stützklemmen (3) vorhanden sind und die mehreren inneren Stützklemmen (3) in Abständen entlang einer Umfangsrichtung des Drehtisches (1) angeordnet sind.

6. Bearbeitungsmechanismus nach Anspruch 4, wobei die Werkbank ferner aufweist:
einen zweiten Antriebsabschnitt, wobei der zweite Antriebsabschnitt mit dem Drehtisch (1) verbunden ist und der zweite Antriebsabschnitt dazu eingerichtet ist, den Drehtisch (1) so anzutreiben, dass er in Umfangsrichtung bewegt wird.

7. Bearbeitungsmechanismus nach Anspruch 1, wobei der Bearbeitungsmechanismus ferner aufweist:
eine Basis (10), wobei mindestens eines von der Werkbank, der Bearbeitungsbaugruppe und dem ersten Antriebsabschnitt (9) auf der Basis (10) angeordnet ist.

8. Bearbeitungsvorrichtung, umfassend einen Bearbeitungsmechanismus, wobei der Bearbeitungsmechanismus der Bearbeitungsmechanismus nach einem der Ansprüche 1 bis 7 ist.

## Revendications

1. Mécanisme d'usinage comprenant :
un établi, dans lequel l'établi est configuré pour supporter un cylindre (4) destiné à être usiné ;
dans lequel le mécanisme d'usinage comprend en outre un ensemble d'usinage,
dans lequel l'ensemble d'usinage est disposé, de manière adjacente, à l'établi, et l'ensemble d'usinage est prévu avec un ensemble d'outil de coupe (5) pour usiner à la fois simultanément et respectivement les deux extrémités du cylindre ; et
une première partie d'entraînement (9), dans lequel la première partie d'entraînement (9) est raccordée avec l'ensemble d'usinage, et la première partie d'entraînement (9) est configurée pour entraîner l'ensemble d'usinage afin qu'il se rapproche ou s'éloigne de l'établi ;
un rail de coulissement, dans lequel le rail de coulissement est disposé le long d'une direction horizontale, une première extrémité du rail de coulissement est disposée, de manière adjacente, à l'établi, et une deuxième extrémité du rail de coulissement est disposée à l'opposé de l'établi ; et
une pièce de support (8), dans lequel la pièce de support (8) est disposée, de manière mobile, sur le rail de coulissement,
**caractérisé en ce que** l'ensemble d'outil de coupe (5) comprend un outil rapporté d'usinage inférieur et une première paire vis - écrou (71), la première paire vis - écrou (71) est raccordée à la pièce de support (8), une partie d'extrémité d'une première vis de la première paire vis - écrou (71) est prévue avec une plaque de chariot inférieure (2), la plaque de chariot inférieure (2) est raccordée à l'outil rapporté d'usinage inférieur et l'outil rapporté d'usinage inférieur est utilisé pour réaliser l'opération d'usinage sur une extrémité inférieure du cylindre ;
l'ensemble d'outil de coupe (5) comprend un outil rapporté d'usinage supérieur et une deuxième paire vis - écrou (72), la deuxième paire vis - écrou (72) est raccordée à la pièce de support (8), la deuxième paire vis - écrou (72) et la première paire vis - écrou (71) sont disposées à un intervalle, une partie d'extrémité d'une deuxième vis de la deuxième paire vis - écrou (72) est prévue avec une plaque de chariot supérieure (6), la plaque de chariot supérieure (6) est raccordée à l'outil rapporté d'usinage supérieur et positionnée au-dessus de la plaque de chariot inférieure (2) et l'outil rapporté d'usinage supérieur est utilisé pour réaliser l'opération d'usinage sur une extrémité supérieure du cylindre ;
la pièce de support (8) est prévue avec au moins un rail de guidage (81), la plaque de chariot inférieure (2) et la plaque de chariot supérieure (6) sont raccordées, de manière mobile, avec le rail de guidage (81), la première paire vis - écrou (71) est configurée pour entraîner la plaque de chariot inférieure (2) afin qu'elle se déplace le long d'une direction de longueur du rail de guidage (81), et la deuxième paire vis - écrou (72) est configurée pour entraîner la plaque de chariot supérieure (6) afin qu'elle se déplace le long de la direction de longueur du rail de guidage (81) ;
et **en ce que** :
la première partie d'entraînement (9) est disposée, de manière adjacente, à la deuxième extrémité du rail de coulissement et raccordée avec la pièce de support (8), l'ensemble d'outil de coupe (5) est raccordé avec la pièce de support (8), une partie de l'ensemble d'outil de coupe (5) est disposée, de manière mobile, le long d'une direction verticale afin de réaliser une opération d'usinage sur le cylindre, et la première partie d'entraînement (9) est configurée pour entraîner la pièce de support (8) afin qu'elle entraîne l'ensemble d'outil de coupe (5) pour qu'il effectue un mouvement de va-et-vient sur le rail de coulissement.

2. Mécanisme d'usinage selon la revendication 1, dans lequel la première vis et la deuxième vis sont disposées, de manière parallèle, le long de la direction verticale.

3. Mécanisme d'usinage selon la revendication 1, dans lequel l'outil rapporté d'usinage inférieur et l'outil rapporté d'usinage supérieur sont étendus pour être disposés le long de la direction horizontale.

4. Mécanisme d'usinage selon la revendication 1, dans lequel l'établi comprend :
un plateau tournant (1), dans lequel le plateau tournant (1) est disposé, de manière rotative, par rapport à l'ensemble d'usinage ; et
un dispositif de serrage de support interne (3), dans lequel le dispositif de serrage de support interne (3) est disposé sur le plateau tournant (1), le cylindre (4) destiné à être usiné est prévu sur le dispositif de serrage de support interne (3) par emmanchement, une surface externe du dispositif de serrage de support interne (3) positionnée au niveau d'une partie d'extrémité inférieure du cylindre (4) est disposée sur une distance par rapport à une paroi interne du cylindre (4), afin de former un espace de dégagement pour une opération de l'ensemble d'outil de coupe (5).

5. Mécanisme d'usinage selon la revendication 4, dans lequel il y a une pluralité de dispositifs de serrage de support interne (3) et la pluralité de dispositifs de serrage de support interne (3) sont disposés à intervalles le long d'une direction circonférentielle du plateau tournant (1).

6. Mécanisme d'usinage selon la revendication 4, dans lequel l'établi comprend en outre :
une deuxième partie d'entraînement, dans lequel la deuxième partie d'entraînement est raccordée au plateau tournant (1) et la deuxième partie d'entraînement est configurée pour entraîner le plateau tournant (1) pour être déplacé de manière circonférentielle.

7. Mécanisme d'usinage selon la revendication 1, dans lequel le mécanisme d'usinage comprend en outre :
une base (10), dans lequel au moins l'un parmi l'établi, l'ensemble d'usinage et la première partie d'entraînement (9), est disposé sur la base (10).

8. Dispositif d'usinage comprenant un mécanisme d'usinage, dans lequel le mécanisme d'usinage est le mécanisme d'usinage selon l'une quelconque des revendications 1 à 7.
